Europäisches Patentamt

(19) European Patent Office

Office européen des brevets

(11) Publication number: **0 187 539**
**B1**

(12) **EUROPEAN PATENT SPECIFICATION**

(45) Date of publication of patent specification: **07.03.90**

(21) Application number: **85309535.4**

(22) Date of filing: **30.12.85**

(51) Int. Cl.⁵: **C 04 B 35/58**

(54) **Sintered ceramic articles and method for production thereof.**

(30) Priority: **28.12.84 JP 277705/84**

(43) Date of publication of application:
**16.07.86 Bulletin 86/29**

(45) Publication of the grant of the patent:
**07.03.90 Bulletin 90/10**

(84) Designated Contracting States:
**DE FR GB SE**

(56) References cited:
**EP-A-0 071 997**
**EP-A-0 135 839**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Goto, Yasuhiro c/o K.K. Toshiba**
**1-1 Shibaura, 1-chome Minato-ku**
**Tokyo (JP)**
Inventor: **Komatsu, Michiyasu c/o K.K. Toshiba**
**1-1 Shibaura, 1-chome Minato-ku**
**Tokyo (JP)**
Inventor: **Miyano, Tadashi c/o K.K. Toshiba**
**1-1 Shibaura, 1-chome Minato-ku**
**Tokyo (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

**Description**

This invention relates to sintered ceramic articles having silicon nitride as a main ingredient and excelling in mechanical strength not only at a room temperature but also at elevated temperatures and to a method for the production of the sintered ceramic articles.

Sintered ceramic articles having silicon nitride as a main ingredient possess a high heat-resisting property up to 1,900°C and a low thermal expansion coefficient and, therefore, are excellent also in resistance to thermal shock. In view of these beneficial properties, their utility in applications to various high-strength heat-resisting parts represented by gas turbine blades and nozzles is being tried. Since these sintered ceramic articles have a high ability to corrosionproof metals, their utility as refractory materials destined to contact molten metals has already been realized.

The gravest defect of silicon nitride betrayed when this compound is molded in a shaped article resides in the fact that the compound, used alone, has an extremely poor sintering property. In the sintering of a pure composition of silicon nitride as a starting material, therefore, the sintered composition enjoys the effect of hot press sintering, but fails to show the expected enhancement in density and strength.

With a view to affording such sintered articles desired enhancement in textural compaction and mechanical strength, there has been invented a method which produces a sintered ceramic article by admixing silicon nitride with yttrium oxide and aluminum oxide and, optionally further combining the resultant mixture with aluminum nitride and an oxide such as titanium dioxide, molding the mixture as the raw material in a given shape, and subjecting the molded mixture to either hot pressing or atmospheric sintering.

The hot pressing method and the atmospheric sintering method are highly effective in enhancing textural compaction and mechanical strength of sintered articles. The atmospheric sintering method which is particularly effective in mass production of sintered articles and is advantageous in precluding restrictions on the shapes of sintered articles to be obtained still has room for further improvement in mechanical strength.

The inventors studied the problem described above and have consequently found that, in a silicon nitride-yttrium oxide-aluminum oxide-aluminum nitride system, a sintered ceramic article of excellent mechanical and thermal properties is obtained even by the atmospheric sintering method when the percentage composition of the system is selected within a prescribed range and the sintering conditions are controlled.

This invention has been produced in consequence of the knowledge acquired in the course of the inventors' study mentioned above. It aims to provide sintered ceramic articles which can be produced by the atmospheric sintering technique and which acquire improved high-temperature strength without any sacrifice of room-temperature strength, resistance to thermal shock, and resistance to oxidation, and a method for the production of such sintered ceramic articles.

Specifically, the sintered ceramic articles of the present invention are characterized by being produced by sintering a ceramic mixture consisting of 0.5 to 10% by weight of yttrium oxide, 0.5 to 7.5% by weight of aluminum oxide, 0.5 to 7.5% by weight of aluminum nitride, and the balance of silicon nitride with an average particle size of not more than 1 μm and having an aluminum nitride: aluminum oxide ratio of 0.5∽5:1. The method of this invention for the production of these sintered ceramic articles is characterized by molding the aforementioned ceramic mixture in a given shape and sintering the molded ceramic mixture at 1,650 to 1,850°C in a non-oxidative atmosphere.

In this invention, the yttrium oxide and aluminum oxide components both function as agents for promoting the sintering. The yttrium oxide content is selected in the range of 0.5 to 10% by weight and the aluminum oxide content in the range of 0.5 to 7.5% by weight, respectively based on the total amount of the ceramic mixture. The total of the two contents is desired to fall in the range of 1 to 15% by weight based on the amount of the ceramic mixture. This is because the mechanical strength and the resistance to thermal shock exhibited by the produced sintered article are particularly good when their contents fall in the ranges mentioned above. The aluminum oxide component manifests its effect more desirably when its content exceeds 1% by weight. The silicon nitride component is effective in uniformly dispersing the other components of the ceramic mixture, particularly when the particle size of this component does not exceed 1 μm.

Aluminum nitride which is another additive component in the ceramic mixture of this invention serves to improve the mechanical strength at elevated temperatures and contributes to the promotion of sintering. If this component is used in an excessive amount, the excess amount of the component brings about no discernible improvement of resistance to thermal shock. Thus, the aluminum nitride is selected in the range of 0.5 to 7.5% by weight. The total content of these three additive components is desired to fall in the range of 1 to 15% by weight based on the amount of the ceramic mixture. The total content of the yttrium oxide and aluminum nitride contents is desired to fall in the range of 1 to 15% by weight and the total content of the aluminum oxide and aluminum nitride components in the range of 0.5 to 12.5% by weight, respectively based on the amount of the ceramic mixture.

Further, the ratio of aluminum nitride: aluminum oxide is in the range of 0.5∽5:1; the strength of the sintered article is increased particularly when the ratio falls in this range. The ratio of yttrium oxide: aluminum oxide is desired to be in the range of 0.5∽20:1, the ratio of yttrium oxide: aluminum nitride in the

# EP 0 187 539 B1

range of 1∿10:1, and the ratio of yttrium oxide: total of aluminum oxide and aluminum nitride in the range of 0.5∿10:1.

In this invention, a ceramic mixture containing the aforementioned components in a percentage composition specified above is molded in a given shape and the molded ceramic mixture is sintered in a non-oxidative atmosphere at a temperature in the range of 1,650°C to 1,850°C. The atmosphere for this sintering is required to be formed of a non-oxidative gas such as nitrogen gas or argon. The reason for the non-oxidative atmosphere is that when the sintering is carried out in an atmosphere containing oxygen, silicon nitride is oxided into $SiO_2$ at elevated temperatures and the produced sintered ceramic article fails to manifest sufficiently high strength at elevated temperatures as expected. Even when this sintering is effected as described above by the so-called atmospheric sintering technique, it produces a silicon nitride type sintered ceramic article compact in texture and excellent in high-temperature mechanical strength and resistance to thermal shock. Of course, this sintered ceramic article is obtained with equal properties by any of the other conventional sintering techniques such as, for example, the hot press technique, the ambient pressure technique, and the hot hydrostatic sintering (HIP) technique.

In terms of phase composition, the sintered ceramic articles of this invention obtained as described above come in two types, i.e. the type consisting of β-phase type silicon nitride and a Y—Si—O—N type compound and the type consisting of β-phase type silicon nitride, α'-phase type silicon nitride, and a Y—Si—O—N type compound. In the component phases mentioned above, the α'-phase type silicon nitride is the solid solution of yttrium oxide in β-phase type silicon nitride. The content of this particular phase tends to increase in proportion as the contents of the yttrium oxide and aluminum nitride components in the ceramic mixture are increased. It is generally held that the presence of α'-phase type silicon nitride in a sintered ceramic article ·could degrade the properties of the article.

In the sintered ceramic articles of this invention which have α'-phase type silicon as one of the component phases thereof possess beneficial properties owing to the mixed presence of the particles of α'-phase type silicon nitride and those of β-phase type silicon nitride.

As the result of a study, it has been demonstrated that when the portion having α'-phase type particles in an intertwined state preponderates in the texture of a sintered ceramic article, the strength of the article is inferior and that when the Y—Si—O—N type compound is contained and α'-phase type particles and β-phase type particles are present in a mixed state in a sintered ceramic article, and particularly when the grain boundaries between α'-phase type particles account for not more than 30%, preferably not more than 10%, the strength of the article is not inferior and the other properties thereof are satisfactory.

The sintered ceramic articles produced from ceramic mixtures of the specified percentage composition by the method of this invention possess phase compositions satisfying the conditions mentioned above and, therefore, acquire satisfactory properties.

Now, the present invention will be described below with reference to a working example.

## Example

Silicon nitride powder having an average particle size of 0.8 μm, yttrium oxide powder having an average particle size of 0.9 μm, aluminum oxide powder having an average particle size of 0.6 μm, and aluminum nitride powder having an average particle size of 1.0 μm, were mixed in a varying percentage composition (by weight) indicated in the table, with n-butanol used as a solvent. The powders and the solvent were kneaded in a ball mill lined with rubber for about 24 hours. Thus, a total of 10 powdered samples, including comparative samples, were prepared.

Each sample admixed with 7% by weight of stearic acid (binder) was molded under a pressure of 700 kg/cm² to produce a bar-shaped mold of 60 mm in length, 40 mm in width, and 10 mm in width (to be tested for deflective strength) and a disc-shaped mold of 30 mm in diameter and 10 mm in thickness (to be tested for resistance to thermal shock). The molds so produced were first heated at 700°C for expulsion of the binder by volatilization and subjected to atmospheric sintering at the temperature for the period indicated correspondingly in the table to obtain sintered ceramic articles of silicon nitride type.

The sintered ceramic articles so obtained were tested for density, deflective force (mechanical strength), and resistance to thermal shock. The results are shown in the same table.

3

TABLE

| Sample | Percentage composition | | | | Sintering conditions | | Relative density (%) | Deflective strength (kg/mm²) | | ΔTc (°C) |
| | Silicon nitride | Yttrium oxide | Aluminum oxide | Aluminum nitride | Temperature (°C) | Time (hr) | | Room temperature | 1200°C | |
|---|---|---|---|---|---|---|---|---|---|---|
| Example 1 | 83 | 5 | 4 | 6 | 1700 | 2 | >99 | 91 | 82 | 850 |
| Example 2 | 85 | 7 | 2 | 4 | 1800 | 2 | >99 | 98 | 86 | 900 |
| Example 3 | 88 | 2 | 5 | 5 | 1800 | 2 | >99 | 95 | 75 | 850 |
| Example 4 | 86 | 5 | 1.5 | 7.5 | 1750 | 2 | >99 | 90 | 75 | 850 |
| Example 5 | 90.5 | 5 | 3 | 1.5 | 1750 | 2 | >99 | 100 | 75 | 900 |
| Comparative Experiment 1 | 84 | 7 | 2 | 8 | 1800 | 2 | >99 | 76 | 59 | 700 |
| Comparative Experiment 2 | 72 | 10 | 2 | 10 | 1700 | 2 | >99 | 75 | 60 | 600 |
| Comparative Experiment 3 | 89.5 | 5 | 5 | 0.5 | 1700 | 2 | >99 | 85 | 45 | 800 |
| Comparative Experiment 4 | 92 | 5 | 3 | 0 | 1700 | 2 | >98 | 90 | 40 | 800 |
| Comparative Experiment 5 | 93 | 5 | 0 | 2 | 1800 | 2 | >97 | 75 | 60 | 750 |

In the table, the density is the relative density (%) based on the theoretical density and the value of deflective strength represents the average of the results of four measurements of the magnitude by the three-point bending strength test conducted on test pieces 3×3×30 (mm) in size under the conditions of cross head speed of 0.5 mm/min and span of 20 mm, each at a room temperature and at 1200°C. The value of resistance to thermal shock, ΔTc, represents the magnitude determined by suddenly cooling a given test piece from a prescribed temperature by placing the test piece in cold water and, during the course of this sudden cooling, keeping the test piece under observation for generation of a crack by the fluorescent crack detection method and reported in terms of the difference between the temperature for starting the crack and the temperature of the cold water used.

In the sintered ceramic articles of Example 1, Example 2, and Comparative Experiment 1, the parts having α'-phase type silicon nitride particles in an intertwined state respectively accounted for 2.3%, 0.8% and 20% of the textures.

As described above, the sintered ceramic articles of the present invention can be produced by the atmospheric sintering method and they exhibit satisfactory mechanical strength not only at room temperature but also at elevated temperatures and excel in resistance to thermal shock.

## Claims

1. A sintered ceramic article, characterized by being produced by sintering a ceramic mixture consisting of 0.5 to 10% by weight of yttrium oxide, 0.5 to 7.5% by weight of aluminum oxide, 0.5 to 7.5% by weight of aluminum nitride, and the balance of silicon nitride with an average particle size of not more than 1 µm, and having an aluminum nitride: aluminum oxide ratio in the range of 0.5∾5:1.

2. A sintered ceramic article according to Claim 1, wherein the ratio of yttrium oxide: aluminum oxide is in the range of 0.5∾20:1.

3. A sintered ceramic article according to Claim 1, wherein the ratio of yttrium oxide: aluminum nitride is in the range of 1∾10:1.

4. A sintered ceramic article according to Claim 1, wherein the ratio of yttrium oxide: the total of aluminum oxide and aluminum nitride is in the range of 0.5∾10:1.

5. A sintered ceramic article according to Claim 1, wherein the total amount of yttrium oxide, aluminum oxide, and aluminum nitride is in the range of 1 to 15% by weight based on the amount of said ceramic mixture.

6. A sintered ceramic article according to Claim 1, which has a phase composition of α'-phase type silicon nitride, β-phase type silicon nitride, and a Y—Si—O—N type compound.

7. A sintered ceramic article according to Claim 1, wherein grain boundaries between α'-phase type silicon nitride particles account for not more than 30% of the total of grain boundaries.

8. A method for the production of a sintered ceramic article, which is characterized by molding in a desired shape a ceramic mixture consisting of 0.5 to 10% by weight of yttrium oxide, 0.5 to 7.5% by weight of aluminum oxide, 0.5 to 7.5% by weight of aluminum nitride, and the balance of silicon nitride with an average particle size of not more than 1 µm, and having an aluminum nitride: aluminum oxide ratio in the range of 0.5∾5:1, and by sintering the molded ceramic mixture in a non-oxidative atmosphere at 1,650 to 1,850°C.

9. A method according to Claim 8, wherein the ratio of yttrium oxide: aluminum oxide is in the range of 0.5∾20:1.

10. A method according to Claim 8, wherein the ratio of yttrium oxide: aluminum nitride is in the range of 1∾10:1.

11. A method according to Claim 8, wherein the ratio of yttrium oxide: the total of aluminum oxide and aluminum nitride is in the range of 0.5∾10:1.

12. A method according to Claim 8, wherein the total amount of yttrium oxide, aluminum oxide, and aluminum nitride is in the range of 1 to 15% by weight based on the amount of said ceramic mixture.

## Patentansprüche

1. Gesinterter keramischer Gegenstand, dadurch gekennzeichnet, daß er hergestellt ist durch Sintern einer keramischen Mischung, bestehend aus 0,5 bis 10 Gew.-% Yttriumoxid, 0,5 bis 7,5 Gew.-% Aluminiumoxid, 0,5 bis 7,5 Gew.-% Aluminiumnitrid und als Rest Siliciumnitrid, mit einer mittleren Teilchengröße von nicht mehr als 1 µm und einem Verhältnis Aluminiumnitrid:Aluminiumoxid im Bereich von 0,5∾5:1.

2. Gesinterter keramischer Gegenstand nach Anspruch 1, worin das Verhältnis Yttriumoxid:Aluminiumoxid im Bereich von 0,5∾20:1 liegt.

3. Gesinterter keramischer Gegenstand nach Anspruch 1, worin das Verhältnis Yttriumoxid:Aluminiumnitrid im Bereich von 1∾10:1 liegt.

4. Gesinterter keramischer Gegenstand nach Anspruch 1, worin das Verhältnis Yttriumoxid:Gesamtmenge aus Aluminiumoxid und Aluminiumnitrid im Bereich von 0,5∾10:1 liegt.

5. Gesinterter keramischer Gegenstand nach Anspruch 1, worin die Gesamtmenge aus Yttriumoxid,

# EP 0 187 539 B1

Aluminiumoxid und Aluminiumnitrid im Bereich von 1 bis 15 Gew.-%, bezogen auf die Menge der keramischen Mischung, liegt.

6. Gesinterter keramischer Gegenstand nach Anspruch 1, der eine Phasen-Zusammensetzung aus Siliciumnitrid des Typs der α'-Phase, Siliciumnitrid des Typs der β-Phase und einer Verbindung des Y—Si—O—N-Typs hat.

7. Gesinterter keramischer Gegenstand nach Anspruch 1, worin die Korngrenzen zwischen den Teilchen des Siliciumnitrids der α'-Phase nicht mehr als 30% der Korngrenzen insgesamt ausmachen.

8. Verfahren zur Herstellung eines gesinterten keramischen Gegenstandes, dadurch gekennzeichnet, daß eine keramischen Mischung, bestehend aus 0,5 bis 10 Gew.-% Yttriumoxid, 0,5 bis 7,5 Gew.-% Aluminiumoxid, 0,5 bis 7,5 Gew.-% Aluminiumnitrid und als Rest Siliciumnitrid, mit einer mittleren Teilchengröße von nicht mehr als 1 µm und einem Verhältnis Aluminiumnitrid:Aluminiumoxid im Bereich von 0,5∞5:1 in eine gewünschte Form gebracht und die geformte keramische Mischung in einer nicht-oxidierenden Atmosphäre bei 1 650°C bis 1 850°C gesintert wird.

9. Verfahren nach Anspruch 8, worin das Verhältnis Yttriumoxid:Aluminiumoxid im Bereich von 0,5∞20:1 liegt.

10. Verfahren nach Anspruch 8, worin das Verhältnis Yttriumoxid:Aluminiumnitrid im Bereich von 1∞10:1 liegt.

11. Verfahren nach Anspruch 8, worin das Verhältnis Yttriumoxid:Gesamtmenge aus Aluminiumoxid und Aluminiumnitrid im Bereich von 0,5∞10:1 liegt.

12. Verfahren nach Anspruch 8, worin die Gesamtmenge aus Yttriumoxid, Aluminiumoxid und Aluminiumnitrid im Bereich von 1 bis 15 Gew.-%, bezogen auf die Menge der keramischen Mischung, liegt.

## Revendications

1. Un article en céramique frittée, caractérisé en ce qu'il est fabriqué par frittage d'un mélange de céramiques contenant de 0,5 à 10% en poids d'oxyde d'yttrium, de 0,5 à 7,5% en poids d'oxyde d'aluminium, 0,5 à 7,5% de nitrure d'aluminium et le complément en nitrure de silicium avec une dimension moyenne des particules n'excédant pas 1 µm, et ayant un rapport nitrure d'aluminium:oxyde d'aluminium situé dans la gamme d'environ 0,5 à 5:1.

2. Un article en céramique frittée conforme à la revendication 1, dans lequel le rapport oxyde d'yttrium:oxyde d'aluminium est dans la gamme d'environ 0,5 à 20:1.

3. Un article en céramique frittée conforme à la revendication 1, dans lequel le rapport oxyde d'yttrium:nitrure d'aluminium est dans la gamme d'environ 1 à 10:1.

4. Un article en céramique frittée conforme à la revendication 1, dans lequel le rapport oxyde d'yttrium:le total de l'oxyde d'aluminium et du nitrure d'aluminium est dans la gamme d'environ 0,5 à 10:1.

5. Un article en céramique frittée conforme à la revendication 1, dans lequel la quantité totale d'oxyde d'yttrium, oxyde d'aluminium, et nitrure d'aluminium est dans la gamme de 1 à 15% en poids par rapport à la quantité du dit mélange de céramiques.

6. Un article en céramique frittée conforme à la revendication 1, qui contient une composition de phase de nitrure de silicium en phase α', de nitrure de silicium en phase β et un composé de type Y—Si—O—N.

7. Un article en céramique frittée conforme à la revendication 1, dans lequel les jonctions entre les particules de nitrure de silicium en phase α' ne représentent pas plus de 30% du total des jonctions entre les grains.

8. Une méthode de fabrication d'un article en céramique frittée, qui est caractérisée par le moulage dans la forme désirée d'un mélange de céramiques contenant de 0,5 à 10% en poids d'oxyde d'yttrium, de 0,5 à 7,5% en poids d'oxyde d'aluminium, de 0,5 à 7,5% en poids de nitrure d'aluminium et le complément en nitrure de silicium avec une dimension moyenne des particules n'excédant pas 1 µm, et ayant un rapport nitrure d'aluminium: oxyde de'aluminium dans la gamme d'environ 0,5 à 5:1, et par le frittage du mélange de céramiques moulé en atmosphère non oxydante à une température de 1 650 à 1 850°C.

9. Une méthode conformé à la revendication 8, dans laquelle le rapport oxyde d'yttrium: oxyde d'aluminium est dans la gamme d'environ 0,5 à 20:1.

10. Une méthode conforme à la revendication 8, dans laquelle le rapport oxyde d'yttrium: nitrure d'aluminium est dans la gamme d'environ 1 à 10:1.

11. Une méthode conforme à la revendication 8, dans laquelle le rapport oxyde d'yttrium: le total de l'oxyde d'aluminium et du nitrure d'aluminium est dans la gamme d'environ 0,5 à 10:1.

12. Une méthode conformé à la revendication 8, dans laquelle la quantité totale d'oxyde d'yttrium, oxyde d'aluminium et nitrure d'aluminium est dans la gamme de 1 à 15% en poids par rapport à la quantité du dit mélange de céramiques.